# DEMANDE DE BREVET EUROPEEN

(11) **EP 2 136 452 A2**
(43) Date de publication de la demande: **23.12.2009**
(21) Numéro de dépôt: 09161438.8
(22) Date de dépôt: 28.05.2009
(51) Int. Cl.: H02J 13/00, H01R 13/66, H01R 31/00

(54) **Système de suivi de l'alimentation d'un appareil électrique et prise électrique communicante pour un tel système**

(30) Priorité: 30.05.2008 FR 0853570
(71) Demandeur: Bouygues Telecom, 92100 Boulogne Billancourt (FR)
(72) Inventeur: Allaire, Stéphane, 78230 le Pecq (FR)
(74) Mandataire: Callon de Lamarck, Jean-Robert

(57) **Abrégé**

Le système de suivi de l'alimentation d'un appareil électrique comporte au moins une prise intermédiaire (PC) destinée à être branchée sur le secteur et à recevoir une prise (PA) d'un appareil électrique, des moyens aptes à détecter un défaut d'alimentation au niveau de cette prise intermédiaire et des moyens aptes à transmettre un message d'alerte à destination d'au moins un utilisateur lorsqu'un tel défaut d'alimentation est détecté. La prise intermédiaire (PC) est une prise communicante comportant un module de communication cellulaire (3) géré par une carte électronique (6) configurée pour déclencher une communication cellulaire.

## Description

La présente invention est relative au suivi de l'alimentation d'un appareil électrique.

On souhaite notamment pouvoir alerter en temps réel et de façon fiable un utilisateur d'une défaillance d'alimentation d'un appareil électrique branché sur le secteur.

On connait déjà des prises électriques équipées de moyens de communication leur permettant d'échanger localement avec des modules ou des unités de traitement.

La demande de brevet US-2007-0141869 propose par exemple, dans une application de suivi de données dans le domaine hospitalier, une prise électrique qui est apte à dialoguer avec un module disposé à proximité dans la même pièce. Cette prise intègre à cet effet des moyens de communication sans fil de type à courte distance (émission/réception de signaux infra-rouges, notamment).

Un autre exemple encore est décrit dans la demande de brevet US-2003-0050737 qui propose un système qui permet la gestion des appareils électriques d'une maison. Ce document prévoit que les prises murales soient équipées de modules qui permettent un suivi de la consommation électrique ou de l'état de marche des appareils connectés et qui sont aptes à communiquer avec une unité centrale qui traite, pour la maison ou l'immeuble concerné, l'ensemble des informations transmises par ces modules. La communication est de type local : Bluetooth, par exemple.

De tels systèmes locaux nécessitent, pour traiter l'information relevée au niveau des prises, des installations particulières au sein de la maison ou de l'immeuble que l'on équipe.

Un but de l'invention est donc de proposer une solution qui ne présente pas cet inconvénient et qui est particulièrement simple en terme d'installation.

Plus particulièrement, l'invention propose une système de suivi de l'alimentation d'un appareil électrique, **caractérisé en ce qu**'il comporte au moins une prise intermédiaire destinée à être branchée sur le secteur et à recevoir une prise d'un appareil électrique, des moyens aptes à détecter un défaut d'alimentation au niveau de cette prise intermédiaire et des moyens aptes à transmettre un message d'alerte à destination d'au moins un utilisateur lorsqu'un tel défaut d'alimentation est détecté, la prise intermédiaire étant une prise communicante comportant un module de communication cellulaire géré par une carte électronique configurée pour déclencher une communication cellulaire.

Dans un mode de réalisation notamment, le système comporte un serveur distant apte à émettre le message d'alerte à destination d'au moins un utilisateur, la carte électronique étant configurée pour que le module de communication cellulaire transmette régulièrement audit serveur, à une fréquence donnée, au moins une information d'identification associée à ladite prise ; par exemple, le serveur comporte des moyens aptes à détecter que ladite information d'identification ne lui a pas été transmise par la prise intermédiaire communicante.

Dans un autre mode de réalisation, la prise communicante intègre les moyens aptes à détecter un défaut d'alimentation et des moyens qui mémorisent au moins une adresse à laquelle transmettre un message d'alerte, la carte électronique étant configurée pour que le module de communication cellulaire transmette ledit message d'alerte à destination de la ou des adresses ainsi mémorisées lorsqu'un défaut d'alimentation est détecté.

L'invention concerne également une prise communicante pour un système de suivi de l'alimentation d'un appareil électrique, ladite prise étant destinée à être branchée sur le secteur et à recevoir une prise dudit appareil électrique, **caractérisée en ce qu**'elle comporte un module de communication cellulaire géré par une carte électronique apte à déclencher une communication de manière à ce que ledit système puisse détecter un défaut d'alimentation au niveau de la prise communicante.

D'autres caractéristiques et avantages ressortiront encore dans la description qui suit, laquelle est purement illustrative et non limitative et doit être lue en regard des dessins annexés sur lesquels :
- La figure 1 illustre schématiquement une prise communicante conforme à un mode de réalisation possible de l'invention, branchée dans une prise murale d'une installation domestique et la prise d'un appareil électrique dont on veut surveiller l'alimentation ;
- La figure 2 est une représentation schématique détaillée illustrant un mode de réalisation possible pour la prise communicante de la figure 1 ;
- La figure 3 illustre un mode de réalisation possible pour un système de suivi de l'alimentation d'un appareil électrique, ce système intégrant une ou plusieurs prises communicantes du type de celle de la figure 2 ;
- La figure 4 illustre un autre mode de réalisation possible pour la prise communicante ;
- La figure 5 illustre un mode de réalisation possible pour un système de suivi de l'alimentation d'un appareil électrique, ce système intégrant une ou plusieurs prises communicantes du type de celle de la figure 4.

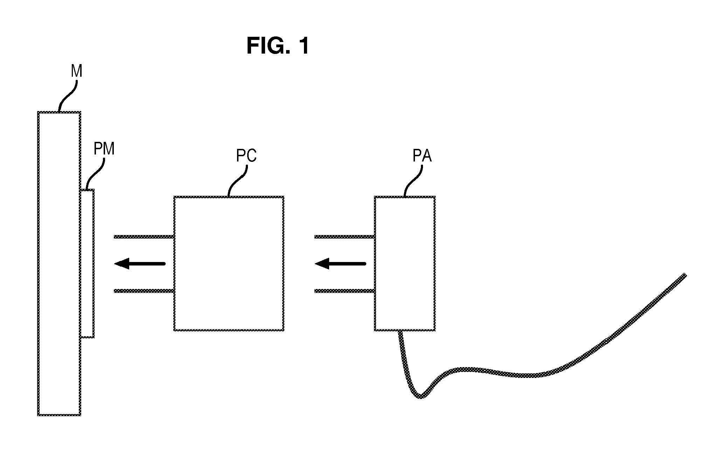

Sur la figure 1, on a représenté un mur M équipé d'une prise murale PM de type femelle qui reçoit une prise communicante PC. Cette prise communicante PC est une prise intermédiaire qui d'un côté présente des fiches mâles par lesquelles elle s'enfiche dans la prise murale PM et qui de l'autre côté présente des contacts à recevoir les fiches d'une prise mâle PA classique d'un appareil électrique.

La prise communicante intermédiaire PC a pour fonction de transmettre à un serveur distant des informations simples, par exemple sur le fait qu'elle voit ou non passer du courant ou encore sur la consommation de l'appareil électrique ou des appareils qui sont branchés sur ladite prise communicante PC.

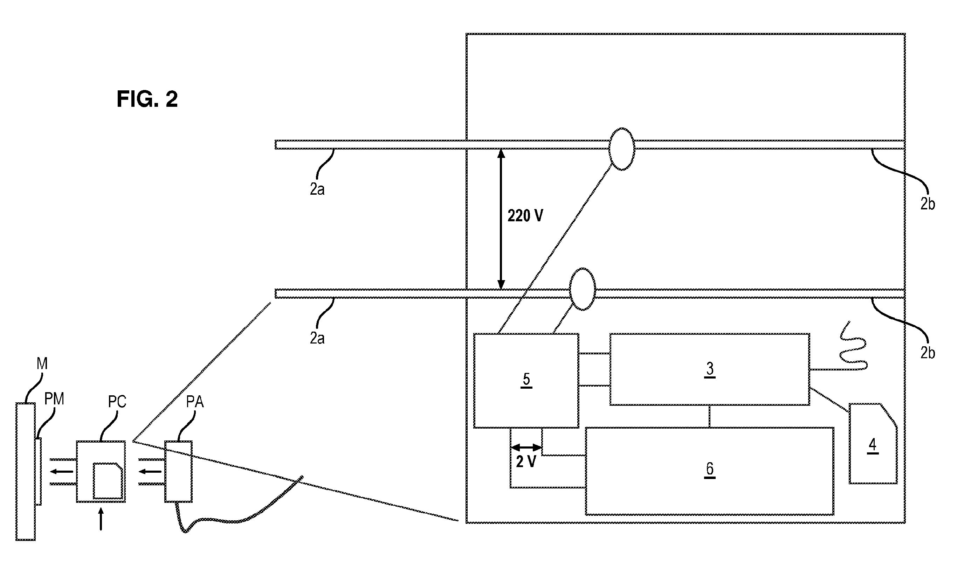

Plus particulièrement, et ainsi que l'illustre la figure 2, la prise communicante PC comporte un boitier 1 en un matériau électriquement isolant, ainsi que des fiches mâles 2a et des contacts femelles 2b en cuivre, destinés à permettre un branchement sur le secteur (sous 220V, par exemple).

Cette prise communicante PC intègre également, à l'intérieur de son boîtier 1, un module 3 de communication cellulaire - par exemple GSM ou GPRS - associé à une carte 4 UICC (Universal Integrated Circuit Card) (en l'occurrence une carte SIM). Un transformateur 5 est interposé entre les fiches ou contacts 2a, 2b et le module pour transformer la tension entre ces fiches ou contacts 2a, 2b en une tension d'alimentation nominale redressée de 2V utilisée pour alimenter le module 3.

Une carte électronique 6, également intégrée dans le boitier 1 et alimentée par le transformateur 5, commande le module de communication 3 et gère les messages transmis par son intermédiaire.

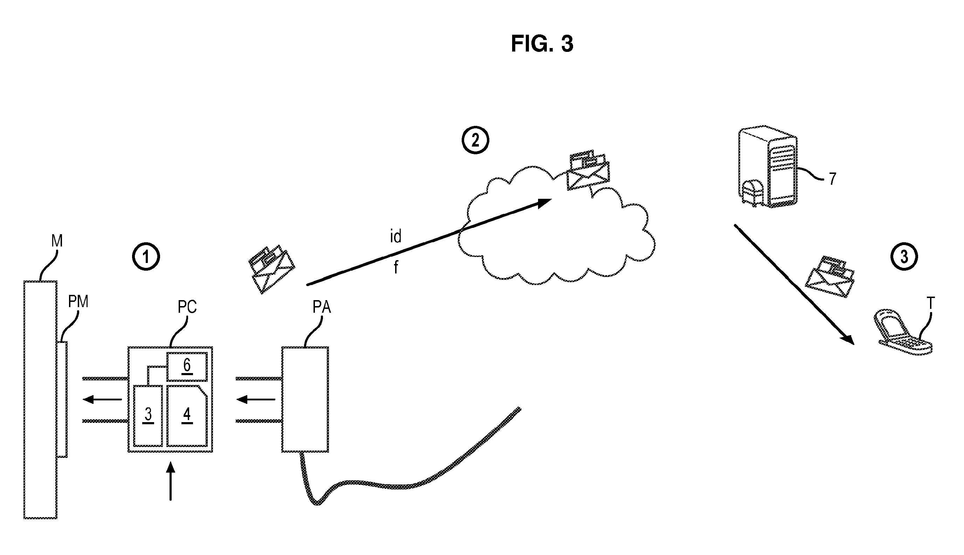

Notamment, dans un mode de mise en oeuvre possible tel qu'illustré sur la figure 3 (mode « push »), la carte 6 déclenche à intervalle régulier une communication (appel, SMS, courriel, etc...) vers un serveur distant 7, par lequel la prise PC transmet audit serveur son identifiant « id ». Ce serveur 7 correspond à une adresse unique (numéro de téléphone, adresse IP, URL) qui est la même pour les différentes prises communicantes PC dont il gère la surveillance. L'adresse peut notamment être mémorisée dans la carte UICC 4.

Cet appel se fait à intervalles réguliers, la fréquence f des appels étant paramétrable sur la prise PC et sa carte électronique 6 et étant choisie par l'utilisateur (client) suivant le niveau de surveillance requis. Plus la fréquence est élevée, plus la surveillance est précise. Les informations d'identifiant « id » et de fréquence f sont stockées sur le serveur distant 7. Celui-ci vérifie, à intervalles réguliers liés à la fréquence f, que la prise PC a bien transmis son appel avec son identifiant « id ».

En cas de panne de courant, le module de communication cellulaire 3 et la carte électronique 6 ne sont pas alimentés, de sorte que le serveur 7 ne reçoit pas l'appel attendu. Si au bout du temps normalement attendu entre deux appels, le serveur distant 7 n'a pas reçu d'appel, cela veut dire que le courant ne passe plus dans la prise murale PM. Dans ce cas ledit serveur distant 7 déclenche un signal d'alerte auprès du client, par exemple en appelant celui-ci sur son téléphone portable T et en lui laissant un message vocal ou en envoyant un mail vers sa messagerie, ou encore en lui transmettant un SMS ou un courriel.

Ainsi, en cas de dysfonctionnement de l'alimentation de l'appareil qui est branché sur la prise communicante PC, le client est informé.

Bien entendu, le serveur peut être configuré de manière à déclencher le signal d'alerte lorsqu'il n'a pas reçu d'appel au bout du temps normalement attendu entre un nombre plus important d'appels. De telle manière, on ne déclenche l'alerte qu'après un certain laps de temps sans courant ce qui permet notamment de ne pas déclencher d'alerte en cas de microcoupures électriques.

Bien entendu, les messages transmis par la carte électrique 6 au serveur 7 peuvent comporter d'autres informations que l'information d'identification « id », par exemple une information sur la quantité de courant qui passe à travers la prise communicante PC, ce qui permet de fournir au client, par exemple sur demande de celui-ci auprès du serveur 7, une information sur la consommation en temps réel et sur la durée de celle-ci. Une analyse de la consommation, par exemple avec définition manuelle ou automatique de bornes supérieures ou inférieures, peut également être mise en oeuvre par la carte électronique 6. Cette analyse est fournie au client, ce qui permet de s'assurer du bon fonctionnement des appareils électriques.

Par ailleurs, on notera que la carte 6 peut être programmée pour se servir du réseau électrique comme antenne pour diffuser sa communication lorsque l'émission/réception au niveau du module 3 de communication cellulaire n'est pas de bonne qualité.

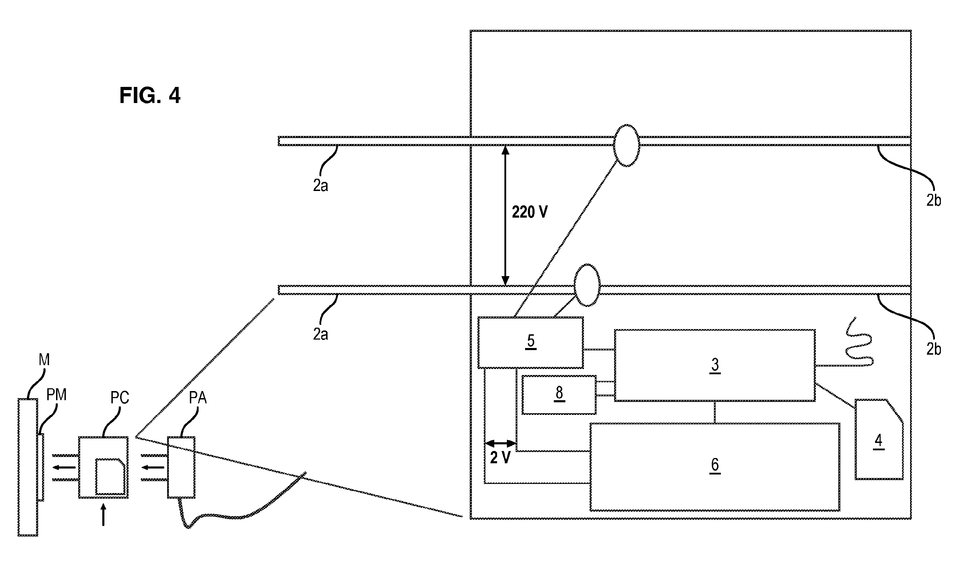

La figure 4 illustre une autre variante de réalisation possible pour la prise intermédiaire communicante PC. Dans ce mode de réalisation, une batterie 8 complète la structure de la prise communicante PC et lui permet d'établir des communications, même en l'absence de courant. Cette batterie 8 est en temps normal alimentée et rechargée via le transformateur 5. Elle sert à alimenter le module 3 et la carte électronique 6 en l'absence de tension d'alimentation aux bornes de la prise communicante PC (c'est-à-dire au niveau des fiches mâles 2a et des contacts femelles 2b). Un indicateur du niveau de chargement de la batterie 8, réalisé par logiciel ou par un matériel dédié, peut être prévu.

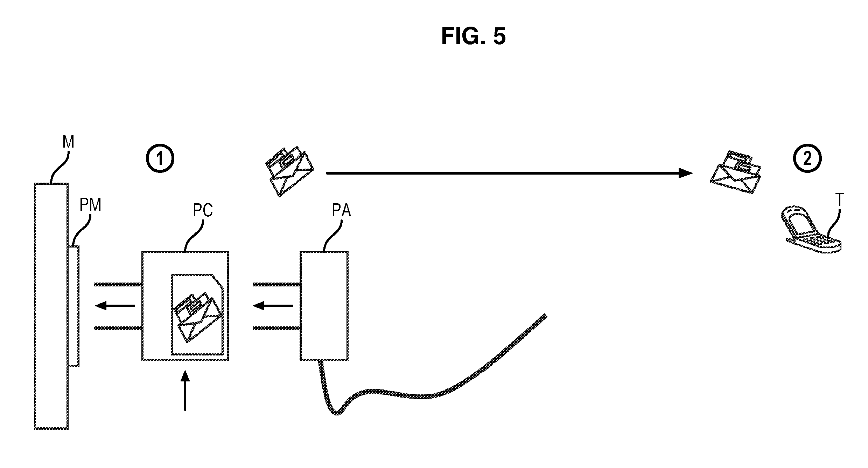

Une telle absence de courant est alors détectée par la carte électronique 6, laquelle déclenche par exemple, comme l'illustre la figure 5, l'envoi d'une communication d'alerte vers une ou plusieurs adresses stockées dans la carte SIM 4 (mode « pull »). Cette communication peut bien entendu n'être déclenchée qu'après un certain laps de temps sans courant de manière ne pas déclencher d'alerte en cas de microcoupures électriques. La communication consiste par exemple en l'envoi d'un message SMS dont le contenu aura été prédéfini et mémorisé avec des numéros d'appel dans la carte SIM 4 via la plateforme OTA (Over The Air, envoi de données à la carte SIM à distance) de l'opérateur, ou via une manipulation directe de l'utilisateur sur des moyens d'interface prévus le cas échéant sur la prise communicante PC. On peut également procéder à un paramétrage de ces informations via le téléphone portable T de l'utilisateur.

Comme on l'aura compris, les deux modes de réalisation qui viennent d'être décrits présentent l'avantage d'être d'une installation particulièrement simple : il suffit de brancher la prise communicante PC sur le secteur, puis de brancher l'appareil dont on veut surveiller la consommation sur cette prise communicante PC.

On notera par ailleurs que la prise communicante PC peut être intégrée dans une prise onduleur en vue d'augmenter la sécurité des appareils sensibles.

On retiendra également que la fonction d'alerte d'un défaut d'alimentation de la prise communicante peut en outre être désactivée. Un interrupteur peut à cet effet être agencé sur le boitier 1 de la prise. Le module de communication cellulaire incorporée dans la prise communicante peut également être utilisé dans le cadre d'une telle désactivation pour recevoir un message de désactivation émis à distance, par exemple par l'utilisateur ou le serveur 7.

## Revendications

1. Système de suivi de l'alimentation d'un appareil électrique, **caractérisé en ce qu'**il comporte au moins une prise intermédiaire (PC) destinée à être branchée sur le secteur et à recevoir une prise (PA) d'un appareil électrique, des moyens aptes à détecter un défaut d'alimentation au niveau de cette prise intermédiaire et des moyens aptes à transmettre un message d'alerte à destination d'au moins un utilisateur lorsqu'un tel défaut d'alimentation est détecté, la prise intermédiaire (PC) étant une prise communicante comportant un module de communication cellulaire (3) géré par une carte électronique (6) configurée pour déclencher une communication cellulaire.

2. Système selon la revendication 1, **caractérisé en ce qu'**il comporte un serveur distant (7) apte à émettre le message d'alerte à destination d'au moins un utilisateur, la carte électronique (6) étant configurée pour que le module de communication cellulaire transmette régulièrement audit serveur (7), à une fréquence donnée (f), au moins une information d'identification (id) associée à ladite prise (PC).

3. Système selon la revendication 2, **caractérisé en ce que** le serveur (7) comporte des moyens aptes à détecter que ladite information d'identification ne lui a pas été transmise par la prise intermédiaire communicante (PC).

4. Système selon la revendication 2, **caractérisé en ce que** la fréquence (f) est programmable.

5. Système selon la revendication 1, **caractérisé en ce que** la prise communicante (PC) intègre les moyens aptes à détecter un défaut d'alimentation et des moyens (4) qui mémorisent au moins une adresse à laquelle transmettre un message d'alerte, la carte électronique (6) étant configurée pour que le module de communication cellulaire transmette ledit message d'alerte à destination de la ou des adresses ainsi mémorisées lorsqu'un défaut d'alimentation est détecté.

6. Système selon la revendication 5, **caractérisé en ce que** le module de communication cellulaire (3) est du type à carte de type UICC et **en ce que** la ou les adresses sont mémorisées sur ladite carte (4).

7. Prise communicante pour un système de suivi de l'alimentation d'un appareil électrique, ladite prise (PC) étant destinée à être branchée sur le secteur et à recevoir une prise dudit appareil électrique (PA), **caractérisée en ce qu'**elle comporte un module de communication cellulaire (3) géré par une carte électronique (6) apte à déclencher une communication de manière à ce que ledit système puisse détecter un défaut d'alimentation au niveau de la prise communicante.

8. Prise communicante selon la revendication 7, **caractérisé en ce qu'**elle comporte un transformateur (5) interposé entre d'une part ses fiches ou contacts conducteurs et d'autre part le module de communication cellulaire et/ou la carte électronique de gestion.

9. Prise communicante selon la revendication 8, **caractérisé en ce qu'**il comporte en outre une batterie (8) qui assure l'alimentation du module de communication cellulaire et/ou de la carte électronique de gestion en l'absence d'alimentation par le transformateur.
